# EUROPÄISCHE PATENTSCHRIFT

(11) **EP 1 510 770 B1**
(45) Veröffentlichungstag und Bekanntmachung des Hinweises auf die Patenterteilung: **09.07.2008**
(21) Anmeldenummer: 04017435.1
(22) Anmeldetag: 23.07.2004
(51) Int. Cl.: F27B 3/24

(54) **Gefäss für ein metallurgisches Schmelzaggregat**
Vessel for a metallurgical melting unit
Cuve pour une installation de fusion de métallurgie

(30) Priorität: 26.08.2003 DE 10339085
(43) Veröffentlichungstag der Anmeldung: 02.03.2005
(73) Patentinhaber: SMS Demag Aktiengesellschaft, 40237 Düsseldorf (DE)
(72) Erfinder:
(74) Vertreter: Klüppel, Walter

(56) Entgegenhaltungen:
- US-A- 4 161 620
- US-A- 4 458 351
- US-A1- 2002 001 332
- US-B1- 6 693 949

## Beschreibung

Die Erfindung betrifft ein metallurgisches Gefäß für ein Schmelz- oder Warmhalteaggregat für flüssige Metalle. Es weist ein Gefäßoberteil sowie ein mit einem Kragen versehenes Gefäßunterteil auf, auf das sich das Gefäßoberteil abstützt. Das Gefäßunterteil nimmt die Schmelze auf, wobei sich oberhalb der Schmelzzone die Schlackenzone als Bereich des Schlackenstandes anschließt. Zwischen dem Gefäßoberteil und dem Gefäßunterteil ist auf Höhe der Schlackenzone eine ringförmige Kühleinrichtung angeordnet.

Aus dem Stand der Technik sind Schmelzgefäße, beispielsweise mit Gleich- oder Wechselstrom betriebene Lichtbogenschmelzöfen bekannt, die aus einem wassergekühlten Gefäßoberteil und einem feuerfest zugestellten Unterteil bestehen. Das Unterteil besteht aus einem Metallmantel bzw. ungekühlten Blechen. Der Blechmantel weist beispielsweise einen Kragen auf, auf dem sich das Oberteil abstützen kann. Das Gefäßunterteil erstreckt sich sowohl über die Schmelzzone als auch die Schlackenzone.

Diese Gefäßunterteile sind, insbesondere im Bereich des Schlackenstandes, zunehmenden thermischen Belastungen ausgesetzt. Die Gründe hierfür sind zum einen der Ofenbetrieb, der immer höhere Schmelzleistungen und kürzere Abstichfolgezeiten mit sich bringt. Zum anderen werden Feuerfestmaterialien bzw. Steinqualitäten mit hohem Kohlenstoffgehalt eingesetzt, die zu einer besseren Wärmeleitung vom Ofeninneren an das Ofengefäß führen. Hierdurch wird die thermische Belastbarkeit der ungekühlten Bleche des Ofenmantels bzw. Gefäßunterteils häufig überschritten. Die Folge dieser örtlichen Überhitzungen des Untergefäßes im Bereich der Schlackenzone sind Verwerfungen oder Deformationen des Gefäßes bis hin zum notwendigen Wechsel des Blechmantels.

Zudem erschweren die auftretenden Deformationen das Zustellen des Ofengefäßes mit Feuerfest-Material erheblich und beeinflussen die Standzeit des Feuerfest-Materials.

Da sich das Obergefäß auf dem Untergefäß abstützt, kommt es bei größeren Deformationen des Untergefäßes als Folgeschäden auch zu Deformationen des Obergefäßes.

Ein solches Ofengefäß mit einem Gefäßoberteil und einem Bodenteil ist aus der EP 0 699 885 B1 bekannt. Das Bodenteil besteht aus einem Mantel aus Stahlblech mit einem Kragen, wobei das Bodenteil mit Feuerfest-Material ausgemauert ist. Um die Wärmeverluste zu minimieren, die dadurch entstehen, dass der gesamte Gefäßwandbereich gekühlt wird, wird vorgeschlagen, dass die Gefäßwand nur noch mit einer oberen und einer unteren Kühleinrichtung gekühlt wird und der dazwischen liegende dem Gefäßinneren zugewandte Bereich der Gefäßwand oberhalb der Schlackenlinie im Wesentlichen aus Feuerfestmaterial besteht. Die zweite untere Kühleinrichtung in Form eines Rings ist auf Höhe der Schlackenlinie angeordnet. Das Gefäßoberteil liegt sowohl auf der Bodenteilausmauerung als auch auf dem Kragen des Blechmantels auf. Neben der Kühlfunktion bildet die zweite untere Kühleinrichtung gleichzeitig auch die tragende Struktur für den keramischen Wandteil und den Deckel des Ofengefäßes. Das Gefäßoberteil wird mittels eines äußeren, sich über das gesamte Gefäßoberteil erstreckenden Käfigs gestützt.

Ausgehend hiervon liegt der Erfindung die Aufgabe zugrunde, ein Ofengefäß für ein Schmelz- oder Warmhalteaggregat für flüssige Metalle zu schaffen, das den steigenden Betriebsansprüchen im Ofenbetrieb standhält.

Diese Aufgabe wird durch das Gefäß mit den Merkmalen des Anspruchs 1 gelöst.
Vorteilhafte Weiterentwicklungen sind in den Unteransprüchen beschrieben.

Kern der Erfindung ist, dass zwischen dem Gefäßoberteil und dem Gefäßunterteil auf Höhe der Schlackenzone ein Zwischenring als Teil der Gefäßseitenwand angeordnet ist und zwar vollkommen statisch entlastet. Dies wird erreicht, indem sich das Gefäßoberteil erst unterhalb des Zwischenrings auf das Gefäßunterteil abstützt, d.h. das Gefäßoberteil überbrückt vollständig den Zwischenring auf Höhe der Schlackenzone.

Erfindungsgemäß wird der kritische Gefäßbereich, nämlich die Gefäßwand der Schlackenzone, statisch entlastet und durch die vorzugsweise lose in den Zwischenring eingebauten Bleche gleichzeitig ein Schutz gegen thermische Überlast geboten und somit die Standzeit des Gefäßes erhöht. Der Zwischenring übernimmt hierbei eine Stützfunktion für die Ausmauerung und keine Tragfunktion, weder für das Gefäßoberteil noch für den Deckel des Gefäßes. Der Zwischenring bildet eine separate unabhängige Zwischenzone der Gefäßwand auf Höhe der Schlackenzone, um thermische Belastungen völlig unabhängig aufnehmen zu können und um gut auswechselbar zu sein. Des Weiteren erweist sich als Vorteil, dass durch die Lösung des statisch entlasteten Zwischenrings die Form des Ofengefäßes im Bereich der Schlackenzone trotz hoher und ungleichmäßiger thermischer Belastung im Vergleich zu herkömmlichen Öfen im Wesentlichen beibehalten werden kann. Dies führt zu einer Verbesserung der Ausmauerungssituation.

Nach einer bevorzugten Ausführungsform ist dieser Zwischenring als Käfigkonstruktion ausgebildet. Vorteilhafterweise übernimmt der Zwischenring eine Kühlfunktion. Die Streben des Käfigs sind vorzugsweise mit Kühlmedium, wie Luft oder Wasser, durchströmbare, geschlossene Hohlprofile. Diese Hohlprofile sind vorzugsweise Rohrprofile bzw. Rohrsegmente. Die Zwischenräume zwischen diesen Streben oder Holmen des Käfigs bzw. offenen Fenster des Käfigs werden durch Bleche verschlossen, die zur Ofeninnenseite weisen. Diese Bleche dienen zur Abstützung des Feuerfest-Materials.

Das Gefäßoberteil stützt sich nicht auf dem Zwischenring ab und belastet diesen daher auch nicht. Hierzu weist das Gefäßoberteil stabile Stelzen auf, deren Enden sich auf den Kragen des Gefäßunterteils abstützen und folglich den Zwischenring überbrücken, der auf der Innenseite des Kragens des Blechmantels des Gefäßunterteils angeordnet ist.

Die Bleche werden vorzugsweise lose in die Zwischenräume bzw. offenen Fenster bzw. Öffnungen der Käfigstruktur des Zwischenrings eingehängt. Sie können zwar geführt angeordnet sein, sind aber im Wesentlichen lose, d.h. in den Führungen gleitend. Hierdurch wird erreicht, dass sie durch eine geringe Verschiebungsmöglichkeit einer thermischen Deformationsbelastung widerstehen. Zudem sind sie leicht und schnell auswechselbar.

Um noch eine bessere Kühlung des Schlackenbereichs zu erreichen, können an sich bekannte Schlackenzonenpanels (slag-line-panels) in den gekühlten Zwischenring eingebaut werden und zwar vorzugsweise in diese losen Bleche. Nach einer konkreten Ausführungsform weisen hierzu die Bleche Durchtritte für die Schwerter oder Kühlflossen der Schlackenzonenpanels auf. Die Zwischenräume zwischen den Schwertern bzw. Kühlflossen werden anstelle von Feuerfeststeinen ausgespritzt. Die Schlackenzonenpanels können eine separate Kühlung aufweisen, indem auf der vom Ofen wegweisenden Seite der Bleche mit Kühlmittel durchflossene Blöcke, im Wesentlichen aus Kupfer, angeordnet sind.

Es empfiehlt sich nach einer bevorzugten Ausführungsform, diese Schlackenzonenpanels mit dem Kühlmediumsystem zu verbinden, das auch die Käfigkonstruktion des Zwischenrings kühlt. Der gekühlte Käfig des Zwischenrings kann damit ebenfalls zur Versorgung der Schlackenzonenpanels mit Kühlmedium benutzt werden.

Weitere Einzelheiten und Vorteile der Erfindung ergeben sich aus der nachfolgenden Beschreibung der beispielhaften Figuren. Es zeigen hierbei:
- Fig. 1: eine Seitenansicht des Schmelzgefäßes eines Lichtbogenofens mit einem Ober- und Unterteil sowie einem Zwischenring;
- Fig. 2: eine Seitensicht des Schmelzgefäßes nach Fig. 1, von der Längsseite gesehen, ohne Gefäßoberteil;
- Fig. 3: eine Schnittansicht des Schmelzgefäßes der Fig. 1 und 2 auf Höhe des Zwischenrings;
- Fig. 4: eine Seitenansicht auf einen Ausschnitt des Zwischenrings;
- Fig. 5: die Schnittansicht A-A der Fig. 4.

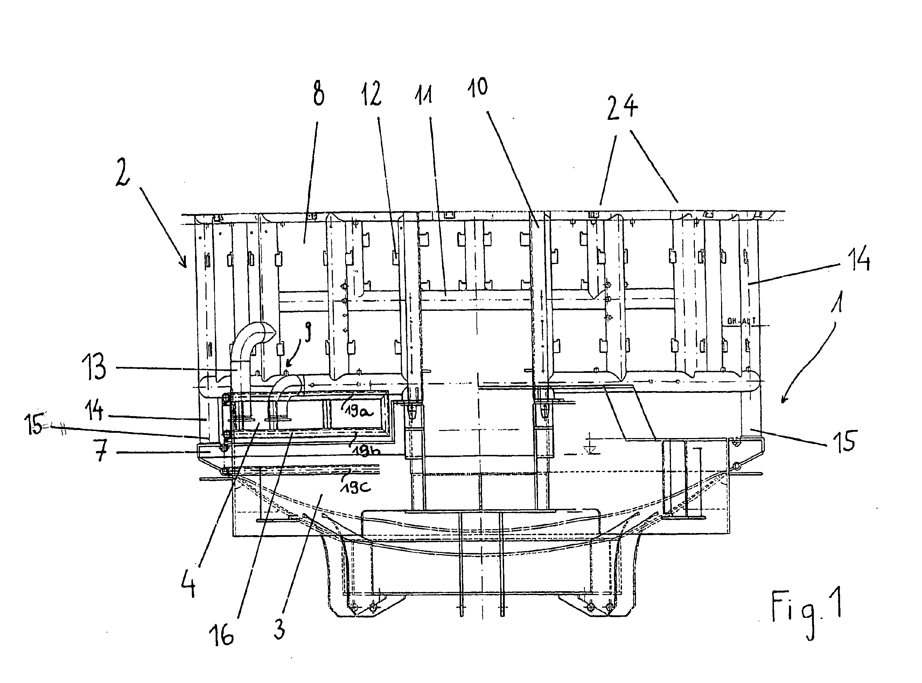

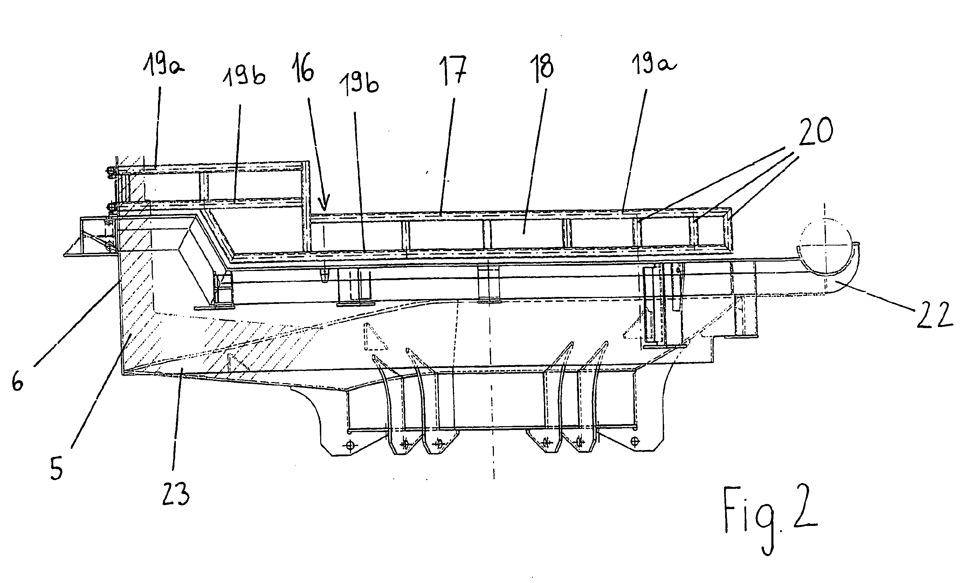

Fig. 1 und Fig. 2 zeigen jeweils Seitenansichten des erfindungsgemäßen Gefäßes 1 für ein Schmelz- oder Warmhalteaggregat, d.h. ein metallurgisches Gefäß 1 für Prozesse unter Ausbildung von Schlacken oder anderen aggressiven Zonen. Das Ofengefäß 1 setzt sich aus drei wesentlichen Elementen zusammen, nämlich dem Oberteil- und Unterteil 2, 3 sowie einem Zwischenring 4.

Das Gefäßunterteil 3 besteht aus einem mit Feuerfest-Material 5 ausgemauerten Blechmantel 6 (vgl. Fig. 2), der in einem vorspringenden Kragen 7 am oberen Rand des Gefäßunterteils 3 endet. Auf diesen Kragen 7 wird das Gefäßoberteil 2 angeordnet. Das Gefäßoberteil 2 selbst weist gekühlte Wandelemente 8 auf. Die Kühlung, insbesondere Wasserkühlung, wird von einer Käfigstruktur 24 aus einer Rohr-Spalt-Rohrkonstruktion 9 übernommen. Längs und quer verlaufende Rohrspalte 10, 11 sind entlang der Wandelemente 8 fest über Befestigungselemente 12 angeordnet und stehen durch Rohrleitungen 13 mit einem Kühlwasserzuführund -ablaufsystem (nicht gezeigt) in Verbindung. Die die gesamte Wand überziehende Kühl-Käfigstruktur bzw. Rohrspalt-Konstruktion 9 umfasst stabile Stelzen 14, hier Hohlprofile, deren Enden 15 sich auf dem Kragen 7 des Gefäßunterteils 3 abstützen.

Der Zwischenring 4 ist zwischen dem Unter- und Oberteil 3, 2 oberhalb der sich im Betrieb einstellenden Schmelzzone auf Höhe der Schlackenzone, d.h. in dem Bereich des Schlackenstandes beim Ofenbetrieb, statisch entlastet angeordnet, indem das Gefäßoberteil 2, den Zwischenring 4 überbrückend, sich unmittelbar auf den Rand (7) des Untergefäßes 3 abstützt und nicht über den Zwischenring 4. Der Zwischenring 4 ist auf Höhe der sich im Betrieb des Ofens entstehenden Schlackenschicht angeordnet, wobei er in etwa mit der Schlackenlinie abschließen kann.

Der Zwischenring 4 besteht bei der gezeigten Ausführungsform, auf die die Erfindung nicht beschränkt ist, aus einer gekühlten Käfigstruktur 16, wobei aber keine Rohrspalte entlang von Wandelementen befestigt sind, sondern die Kühlmittelleitungen aus vollständigen Hohlprofilen 17 bzw. Rohrprofilen bestehen. In die durch ein bestimmtes Muster der Käfigstruktur gebildeten Zwischenräume, beispielsweise im Wesentlichen rechteckigen Zwischenräume, der Käfigkonstruktion 16 sind Bleche 18 lose eingesetzt. Diese Bleche 18 dienen zur Abstützung des zum Ofeninneren dagegen gemauerten Feuerfestmaterials.

Im Einzelnen setzt sich bei der gezeigten Ausführungsform die Käfigstruktur 16, auf die die Erfindung nicht beschränkt ist, aus zwei parallel zueinander beabstandet angeordneten Rohrsegmenten 19a, b zusammen, die mittels Zwischensegmenten 20 zu einem Fließkreislauf miteinander verbunden sind. Diese Rohrsegmente verlaufen bei einem Ofengefäß in nicht gekippter Stellung im Wesentlichen parallel zum Hüttenflur. In Fig. 1 ist angedeutet, dass auch ein drittes Rohrsegment 19c möglich ist. Die Anzahl der Rohrsegmente sowie das Muster der Käfigstruktur und der Wasserführung hängen von der Schlackenzone ab, d.h. der zu erwartenden Schlackenbildung und Schlackenhöhe und -menge.

Wie oben erwähnt werden in die Zwischenräume der durch die Rohrsegmente gebildeten Käfigstruktur Bleche lose angeordnet. Lose bedeutet hier, dass die Bleche ggfs. geführt sind, dass sie aber genügend Spiel haben, um thermische Belastungen durch Bewegungsfreiheit zu kompensieren. Hierzu sind die Bleche nach einer bevorzugten Ausführungsform entlang der Rohrsegmente in Führungen gleitbar.

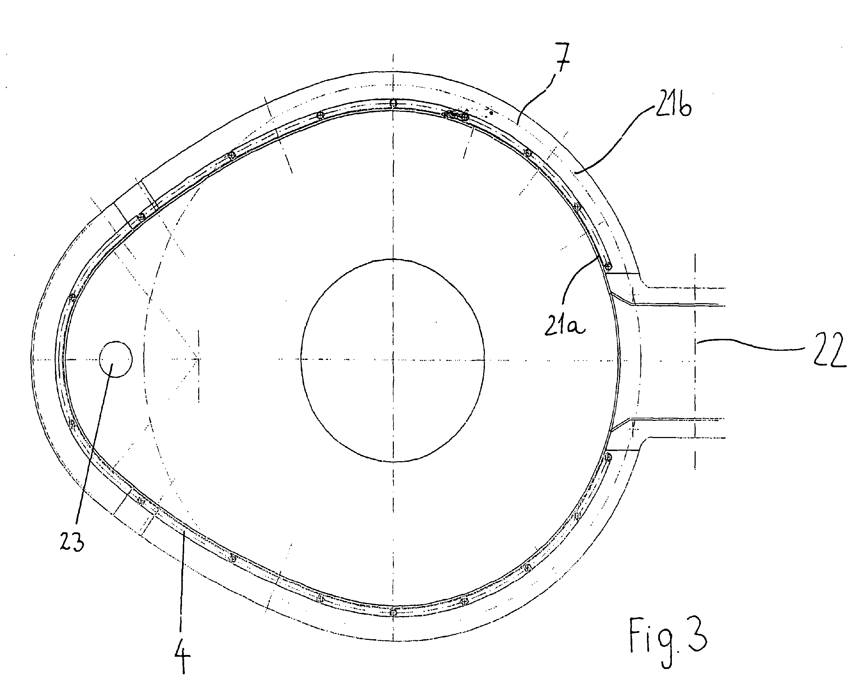

Die Fig. 2 und 3 machen die spezifische Ausbildung der Käfigstruktur 16 des Zwischenrings 4 nach der gezeigten Ausführungsform deutlich. Der Zwischenring 4 erstreckt sich im Wesentlichen um den gesamten Umfang des Gefäßunterteils 3 entlang der Innenseite 21 a des vorspringenden Kragens 7 des Gefäßunterteils 3. Unterbrochen wird dieser Zwischenring 4 nur im Schlackentürbereich 22 des Ofengefäßes 1. Im gegenüberliegenden Bereich des Abstichlochs 23 ist die Käfigstruktur des Zwischenrings 4 etwas höher als im übrigen Teil des Ofens ausgebildet und schützt damit die beim Abstichvorgang am meisten belastete thermische Zone (vgl. Fig. 2). Die Außenseite 21b des vorspringenden Kragens bildet die Stützfläche für die Stelzen 14 des Gefäßoberteils 2.

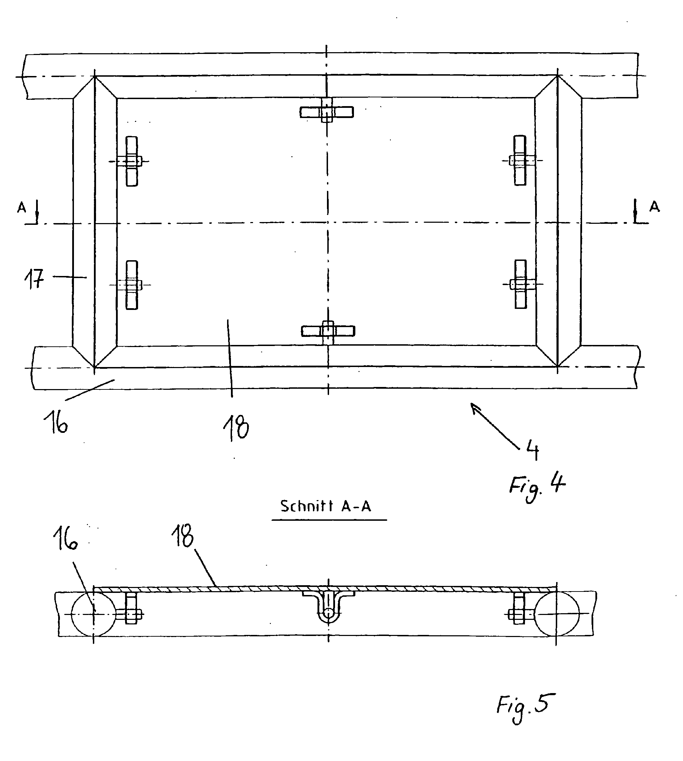

Als Alternative zur Ausmauerung mit Feuerfestmaterial sollen vorzugsweise bekannte Schlackenzonenpanels in die in den Zwischenring eingesetzten Bleche eingebaut werden, wie dies mit den Fig. 4 und 5 gezeigt ist.

Das Gefäß nach der Erfindung eignet sich insbesondere als Ofengefäß bei ACoder DC- Elektrolichtbögenöfen als Einschmelzaggregat. Es kann aber ebenfalls als Warmhalteaggregat für Schmelzen mit Schlacken oder anderen thermisch belasteten Zonen eingesetzt werden. Aufgrund der vollständigen statischen Entlastung des vorzugsweise gekühlten Zwischenrings 4 wird ein Ofengefäß 1 geschaffen, dass unanfällig gegenüber thermischen Überlastungen ist und hohe Standzeiten aufweist.

Bezugszeichenliste:
- 1: metallurgisches Gefäß
- 2: Gefäßoberteil
- 3: Gefäßunterteil
- 4: Zwischenring
- 5: Feuerfestmaterial
- 6: Blechmantel
- 7: vorspringender Kragen des Gefäßunterteils
- 8: Wandelemente des Gefäßoberteils
- 9: Rohrspalt-Rohrkonstruktion
- 10: längs verlaufende Rohrspalte
- 11: quer verlaufende Rohrspalte
- 12: Befestigungselemente
- 13: Rohrleitungen
- 14: Stelzen
- 15: Stelzenden oder Stelzfüße
- 16: Käfigstruktur bzw. Käfigkonstruktion
- 17: Hohlprofile bzw. Rohrprofile der Käfigstruktur 16
- 18: Bleche
- 19: Rohrsegmente (19a-c)
- 20: Zwischensegmente
- 21: Innenseite des vorspringenden Kragens 7 des Gefäßunterteils 3 (21 a) Außenseite des vorspringenden Kragens (21 b) als Stützfläche für Gefäßoberteil
- 22: Schwenkbereich
- 23: Abstichloch
- 24: Käfigstruktur des Gefäßoberteils

## Patentansprüche

1. Metallurgische Gefäß (1) für ein Schmelzaggregat für flüssige Metalle,
wobei die flüssigen Metalle in einer Schmelzzone und einer darüber vorhandenen Schlackenzone bzw. Schlackenstand vorliegen,
mit einem Gefäßoberteil (2) und einem mit einem Kragen (7) versehenen Gefäßunterteil (3), auf das sich das Gefäßoberteil (2) abstützt, und
wobei zwischen dem Gefäßoberteil (2) und dem Gefäßunterteil (3) auf Höhe der Schlackenzone bzw. des Schlackenstandes eine ringförmige Einrichtung angeordnet ist,
**dadurch gekennzeichnet,**
**dass** sich das Gefäßoberteil (2), die ringförmige Einrichtung, die als Zwischenring (4) ausgebildet ist und sich außerhalb des Ofenraumes befindet, vollständig überbrückend, erst unterhalb des Zwischenrings (4) nur auf dem Kragen (7) des Gefäßunterteils (3) abstützt, wobei der Zwischenring (4) statisch vollständig entlastet ist.

2. Metallurgisches Gefäß nach Anspruch 1,
**dadurch gekennzeichnet,**
**dass** der Zwischenring (4) als Käfigkonstruktion (16) ausgebildet ist mit an der Käfigkonstruktion (16) angeordneten Blechen (18), die zur Ofeninnenseite hin mit Feuerfest-Material versehen sind.

3. Metallurgisches Gefäß nach Anspruch 1 oder 2,
**dadurch gekennzeichnet,**
**dass** der Zwischenring (4) eine Kühleinrichtung ist.

4. Metallurgisches Gefäß nach Anspruch 3,
**dadurch gekennzeichnet,**
**dass** die Käfigkonstruktion (16) aus mit Kühlmedium durchströmbaren, geschlossenen Hohlprofilen (17), wie Rohrprofilen, gebildet ist.

5. Metallurgisches Gefäß nach einem der Ansprüche 1 bis 4,
**dadurch gekennzeichnet,**
**dass** das Gefäßoberteil (2) stabile Stelzen (14) aufweist, deren Enden (15) sich auf den Kragen (7) des Gefäßunterteils (3) abstützen.

6. Metallurgisches Gefäß nach einem der Ansprüche 1 bis 5,
**dadurch gekennzeichnet,**
**dass** an der Innenseite (21a) des Kragens (7) des Gefäßunterteils (2) der Zwischenring statisch entlastet angeordnet ist, während sich auf der Außenseite (21b) des Kragens die Stelzen (14) des Gefäßoberteils (2) abstützen.

7. Metallurgisches Gefäß nach Anspruch 6,
**dadurch gekennzeichnet,**
**dass** diese Stelzen (14) Teil einer Käfigstruktur (24) des Gefäßoberteils sind.

8. Metallurgisches Gefäß nach einem der Ansprüche 2 bis 7,
**dadurch gekennzeichnet,**
**dass** die Bleche (18) in die Zwischenräume der Käfigkonstruktion (16) lose eingehängt sind.

9. Metallurgisches Gefäß nach einem der Ansprüche 2 bis 7,
**dadurch gekennzeichnet,**
**dass** die Bleche (18) entlang von an der Käfigstruktur angebrachten Führungen gleitbar sind.

10. Metallurgisches Gefäß nach einem der Ansprüche 2 bis 9,
**dadurch gekennzeichnet,**
**dass** in diese Bleche (18) Schlackenzonenpanels eingebaut sind.

11. Metallurgisches Gefäß nach Anspruch 10,
**dadurch gekennzeichnet,**
**dass** in die Bleche (18) Durchtritte für die Schwerter bzw. Bleche der Schlackenzonenpanels eingebracht sind.

12. Metallurgisches Gefäß nach Anspruch 10 oder 11,
**dadurch gekennzeichnet,**
**dass** die Schlackenzonenpanels mit den Kühlmedium-Profilen der Käfigkonstruktion (16) in Verbindung stehen und über diese mit Kühlmedium versorgt werden.

## Claims

1. Metallurgical vessel (1) for a smelting unit for liquid metals, wherein the liquid metals are present in a smelting zone and a slag zone or slag state present thereabove, with a vessel upper part (2) and a vessel lower part (3), which is provided with a collar (7) on which the vessel upper part (2) is supported, and wherein an annular device is arranged between the vessel upper part (2) and the vessel lower part (3) at the level of the slag zone or the slag state, **characterised in that** the vessel upper part (2) is supported - so as to completely bridge over the annular device, which is constructed as an intermediate ring (4) and is disposed outside the furnace chamber - not until below the intermediate ring (4) only on the collar (7) of the vessel part (3), wherein the intermediate ring (4) is statically completely relieved of load.

2. Metallurgical vessel according to claim 1, **characterised in that** the intermediate ring (4) is constructed as a cage construction (16) with plates (18), which are arranged at the cage construction (16) and which are provided with refractory material towards the furnace inner side.

3. Metallurgical vessel according to claim 1 or 2, **characterised in that** the intermediate ring (4) is a cooling device.

4. Metallurgical vessel according to claim 3, **characterised in that** the cage construction (16) is formed from closed hollow profile members (17), such as tube hollow profile members, able to be flowed through by coolant.

5. Metallurgical vessel according to any one of claims 1 to 4, **characterised in that** the vessel upper part (2) has stable stilts (14), the ends (15) of which are supported on the collar (7) of the vessel lower part (3).

6. Metallurgical vessel according to any one of claims 1 to 5, **characterised in that** the intermediate ring is arranged to be statically relieved of load at the inner side (21 a) of the collar (7) of the vessel lower part (2), whereas the stilts (14) of the vessel upper part (2) are supported on the outer side (21 b) of the collar.

7. Metallurgical vessel according to claim 6, **characterised in that** the stilts (14) are part of a cage structure (24) of the vessel upper part.

8. Metallurgical vessel according to any one of claims 2 to 7, **characterised in that** the plates (18) are loosely suspended in the interstices of the cage construction (16).

9. Metallurgical vessel according to any one of claims 2 to 7, **characterised in that** the plates (18) are slidable along guides mounted at the cage structure.

10. Metallurgical vessel according to any one of claims 2 to 9, **characterised in that** slag zone panels are installed in these plates (18).

11. Metallurgical vessel according to claim 10, **characterised in that** passages for the struts or plates of the slag zone panels are formed in the plates (18).

12. Metallurgical vessel according to claim 10 or 11, **characterised in that** the slag zone panels are connected with the coolant profile members of the cage construction (16) and are supplied with coolant by way of these.

## Revendications

1. Cuve métallurgique (1) pour une unité de fonderie de métaux liquides, les métaux liquides étant présents dans une zone de fusion et dans un cordon de laitier ou niveau de laitier qui se trouve au-dessus,
avec une partie supérieure de cuve (2) et une partie inférieure de cuve (3) munie d'une collerette (7), sur laquelle la partie supérieure de cuve (2) s'appuie et entre la partie supérieure de cuve (2) et la partie inférieure de cuve (3), un dispositif annulaire étant disposé à la hauteur du cordon de laitier ou du niveau de laitier,
**caractérisé en ce que**
la partie supérieure de cuve (2) s'appuie en chevauchant totalement le dispositif annulaire qui est conçu sous la forme d'une bague intermédiaire (4) et qui se trouve à l'extérieur de l'espace du four, seulement en dessous de la bague intermédiaire (4) seulement sur la collerette (7) de la partie inférieure de cuve (3), la bague intermédiaire (4) étant totalement déchargée du point de vue statique.

2. Cuve métallique selon la revendication 1, **caractérisée en ce que** la bague intermédiaire (4) est conçue sous la forme d'une construction en cage (16), avec des tôles (18) disposées sur la construction en cage (16), qui sur la face interne du four sont munies de matière réfractaire.

3. Cuve métallique selon la revendication 1 ou 2, **caractérisée en ce que** la bague intermédiaire (4) est un dispositif de refroidissement.

4. Cuve métallique selon la revendication 3, **caractérisée en ce que** la construction en cage (16) est réalisée en profilés (17) susceptibles d'être traversés par un agent de refroidissement, comme des profilés tubulaires.

5. Cuve métallique selon l'une quelconque des revendications 1 à 4, **caractérisée en ce que** la partie supérieure de cuve (2) comporte des béquilles supports (14) stables, dont les extrémités (15) s'appuient sur la collerette (7) de la partie inférieure de cuve (3).

6. Cuve métallique selon l'une quelconque des revendications 1 à 5, **caractérisée en ce que** la bague intermédiaire est disposée en étant déchargée du point de vue statique sur la face intérieure (21 a) de la collerette (7) de la partie inférieure de cuve (3), alors que les béquilles supports (14) de la partie supérieure de cuve (2) s'appuient sur la face extérieure (21 b) de la collerette.

7. Cuve métallique selon la revendication 6, **caractérisée en ce que** lesdites béquilles supports (14) sont une partie d'une structure en cage (24) de la partie supérieure de cuve.

8. Cuve métallique selon l'une quelconque des revendications 2 à 7, **caractérisée en ce que** les tôles (18) sont accrochées librement dans les interstices de la construction en cage (16).

9. Cuve métallique selon l'une quelconque des revendications 2 à 7, **caractérisée en ce que** les tôles (18) sont susceptibles de coulisser le long de guidages montés sur la structure en cage.

10. Cuve métallique selon l'une quelconque des revendications 2 à 9, **caractérisée en ce que** des panneaux de cordon de laitier sont intégrés dans lesdites tôles (18).

11. Cuve métallique selon la revendication 10, **caractérisée en ce que** dans les tôles (18) sont ménagés des passages pour les épées ou tôles des panneaux de cordon de laitier.

12. Cuve métallique selon la revendication 10 ou 11, **caractérisée en ce que** les panneaux de cordon de laitier sont en liaison avec les profilés d'agent de refroidissement de la construction en cage (16) et sont alimentés en agent de refroidissement via ces derniers.
